# EUROPÄISCHE PATENTSCHRIFT

(11) **EP 3 717 955 B1**
(45) Veröffentlichungstag und Bekanntmachung des Hinweises auf die Patenterteilung: **26.07.2023**
(21) Anmeldenummer: 18804272.5
(22) Anmeldetag: 15.11.2018
(51) Int. Cl.: G02B 27/01

(54) **HEAD-UP-DISPLAY-SYSTEM**
HEAD-UP-DISPLAY-SYSTEM
SYSTÈME D'AFFICHAGE TÊTE HAUTE

(30) Priorität: 30.11.2017 DE 102017221531
(43) Veröffentlichungstag der Anmeldung: 07.10.2020
(73) Patentinhaber: Continental Automotive Technologies GmbH, 30165 Hannover (DE)
(72) Erfinder: VETSCH, Eugen, 64569 Nauheim (DE); SCHAPER, Thomas, 64850 Schaafheim (DE); EFE, Yilmaz, 65824 Schwalbach a. Ts. (DE)
(74) Vertreter: Continental Corporation
(86) Internationale Anmeldenummer: PCT/EP2018/081287
(87) Internationale Veröffentlichungsnummer: WO 2019/105740

(56) Entgegenhaltungen:
- EP-A1- 3 032 317
- WO-A1-2016/089985
- WO-A1-2017/067528
- CN-U- 203 958 001
- DE-A1-102005 037 797
- DE-A1-102015 225 068
- DE-B4-102005 037 797
- JP-A- 2016 168 931

## Beschreibung

Die vorliegende Erfindung betrifft ein Head-Up-Display-System, insbesondere für ein Kraftfahrzeug, welches eine teilreflektierende transparente Scheibe, eine Head-Up-Display-Einheit und einen Fahrzeugsitz aufweist.

Aus WO 2017/067528 A1 ist ein abgetrenntes Head-up-Display mit einem Projektions-Host, einem Spiegel und einer reflektierenden Projektionsfläche bekannt. CN 203 958 001 U offenbart eine Head-up-Display-Vorrichtung mit einem T-förmigen Tragbügel, an dem einerseits ein Mikroprojektor und andererseits eine lichtemittierende Glasplatte befestigt ist. Mittels des Mikroprojektors wird eine Anzeige auf die Glasplatte projiziert. Der Mikroprojektor und die Glasplatte stehen über den Tragbügel in einer starren, festen Zuordnung zueinander.

Die DE 10 2015 012 626 A1 offenbart ein Head-Up-Display-System, bei dem eine Head-Up-Display-Einheit im Bereich der Fahrzeugdecke angeordnet ist, und Lichtstrahlen auf eine teilreflektierende transparente Scheibe strahlt, die sich oberhalb des Armaturenbretts eines Lastkraftwagens befindet. Als nachteilig daran ist anzusehen, daß der auf einem Fahrzeugsitz befindliche Fahrer die Anzeige immer im unteren Bereich der Windschutzscheibe sieht, und diese ihm, je nach Höhenverstellung des Fahrzeugsitzes aufgrund des sich dabei ändernden Sichtwinkels, auch noch mehr oder weniger hoch angeordnet erscheint.

Ein demgegenüber verbessertes Head-Up-Display-System ist wünschenswert.

Die Erfindung wird durch den unabhängigen Anspruch definiert. Weitere vorteilhafte Ausführungsformen sind in den abhängigen Ansprüchen definiert.

Ein erfindungsgemäßes Head-Up-Display-System weist eine teilreflektierende transparente Scheibe auf, die einen Bereich nahezu gleichmäßiger Krümmung hat. Das Head-Up-Display-System weist weiterhin eine Head-Up-Display-Einheit und einen Fahrzeugsitz auf, an dem die Head-Up-Display-Einheit angeordnet ist. Dies hat den Vorteil, daß auch bei Höhenverstellung oder seitlicher Verstellung des Fahrzeugsitzes der räumliche Bereich, in dem sich die Augen des Nutzers befinden müssen, um die Anzeige der Head-Up-Display-Einheit komplett erfassen zu können, die sogenannte Eyebox, sich nicht verschiebt, da die Position der Head-Up-Display-Einheit mit dem Fahrzeugsitz verstellt wird. Dies ist auch der Fall bei einer variablen Höhe des Fahrzeugsitzes, die beispielsweise aufgrund von Federung und auftretenden Straßenunebenheiten auftritt. Aufgrund der gleichmäßigen Krümmung der Scheibe in dem Bereich, in dem die von der Head-Up-Display-Einheit erzeugten Strahlen reflektiert werden, ist auch die durch die Scheibe verursachte Verzerrung unabhängig von der Verstellung des Fahrzeugsitzes, sodaß eine ungeänderte Vorverzerrung in der Head-Up-Display-Einheit ausreicht, um dem Nutzer eine möglichst unverzerrte Anzeige bereitzustellen. Die Head-Up-Display-Einheit entspricht dabei einer aus herkömmlichen Head-Up-Display bekannten. Der Fahrzeugsitz ist beispielsweise der Fahrersitz eines Kraftfahrzeugs, Flugzeugs, Wasserfahrzeugs oder ähnlichem. Auch der Beifahrersitz oder der Sitz eines anderen Fahrzeuginsassen kann dabei vorgesehen sein. Die teilreflektierende transparente Scheibe weist einen Bereich nahezu gleichmäßiger Krümmung auf. Dieser Bereich wird zum Reflektieren der von der Head-Up-Display-Einheit ausgehenden Lichtstrahlen genutzt. Aufgrund der gleichmäßigen Scheibenkrümmung erfolgt eine gleichmäßige Verzerrung, unabhängig von dem Teilbereich des Bereichs nahezu gleichmäßiger Krümmung, in dem die Reflexion stattfindet. Der Bereich nahezu gleichmäßiger Krümmung kann sowohl völlig eben sein, als auch eine konstante Krümmung oder eine sich räumlich nur geringfügig ändernde Krümmung in horizontaler und/oder vertikaler Richtung aufweisen. Bei der teilreflektierenden transparenten Scheibe handelt es sich um die Windschutzscheibe eines Fahrzeugs. Üblicherweise ist das Head-Up-Display System in einem Fahrzeug angeordnet, bei dem sichergestellt ist, dass sich der Winkel zwischen Nutzer und Scheibe nicht oder nahezu nicht ändert.

Es gibt viele Möglichkeiten, die Head-Up-Display-Einheit anzuordnen: im unteren Bereich des Fahrzeugsitzes, oder auf der Höhe des Oberkörpers des Nutzers. Besonders vorteilhaft ist erfindungsgemäß vorgesehen, daß die Head-Up-Display-Einheit an einer Kopfstütze des Fahrzeugsitzes befestigt ist. Dies hat den Vorteil, daß der Strahlengang in etwa auf Kopfhöhe des Nutzers oder etwas darüber verläuft. In diesem Bereich ist es unwahrscheinlich, daß der Strahlengang durch Armbewegungen des Nutzers unterbrochen wird, da diese im allgemeinen im Bereich darunter erfolgen, beispielsweise beim Einlegen einer anderen Schaltstufe, beim Bedienen eines Radiogerätes, einer Klimaanlage, beim Betätigen einer Außenspiegelverstellung und in ähnlichen Situationen, in denen eine Armbewegung im Bereich des Strahlenganges erfolgt. Dies ist beispielsweise beim manuellen Einstellen eines oben angebrachten Rückspiegels der Fall. In solchen Situationen ist der Nutzer auf die entsprechende Tätigkeit konzentriert, und weniger oder gar nicht auf die Anzeige des Head-Up-Display-Systems. Die Anordnung der Head-Up-Display-Einheit an der Kopfstütze ist insbesondere dann vorteilhaft, wenn die teilreflektierende transparente Scheibe nahezu senkrecht steht, sodaß keine Winkelanpassung erforderlich ist. Die Anordnung an der Kopfstütze hat weiterhin den Vorteil daß die Head-Up-Display-Einheit "freie Sicht" auf die Windschutzscheibe hat, vorbei am Kopf des Fahrers und unbeeinträchtigt von dessen Rumpf oder Armen. Bei höhenverstellbarer Kopfstütze wird diese im allgemeinen individuell auf den Nutzer angepaßt. Dies hat eine noch bessere Justierung der an der Kopfstütze angeordneten Head-Up-Display-Einheit zur Folge, als es allein mithilfe der Sitzhöhenverstellung erreichbar ist. Ein weiterer Vorteil liegt darin, daß, falls der Nutzer vergessen haben sollte, die Höhe der Kopfstütze korrekt einzustellen, das virtuelle Bild welches von der Head-Up-Display-Einheit erzeugt wird, nicht oder nur teilweise für den Nutzer sichtbar ist. Dies ist ein zumindest indirekter Sicherheitshinweis, die Einstellung der Höhe der Kopfstütze zu korrigieren.

Erfindungsgemäß ist vorgesehen, daß die Head-Up-Display-Einheit mittels einer Befestigung an dem Fahrzeugsitz befestigt ist, wobei die Befestigung einen Sitzneigungskompensator aufweist. Dies hat den Vorteil daß auch bei Verstellung der Neigung der Rückenlehne oder des gesamten Sitzes die Eyebox sich nicht verschiebt. Die Befestigung ist in die Head-Up-Display-Einheit integriert, oder sie ist in den Fahrzeugsitz integriert, oder sie ist ein separates Bauteil. Der Sitzneigungskompensator ist beispielsweise ein beweglicher Spiegel der Head-Up-Display-Einheit, der mittels eines Antriebs an die Sitzneigung angepaßt wird, sodaß der Reflexionswinkel an der teilreflektierenden transparenten Scheibe unverändert bleibt. Der Sitzneigungskompensator verstellt mittels eines mechanischen Antriebs die Neigung des Relativwinkels zwischen Head-Up-Display-Einheit und Fahrzeugsitz. Der Antrieb kann sowohl vom Nutzer direkt angetrieben sein als auch motorisch und/oder automatisch angetrieben sein. Bei großer Änderung der Neigung des Fahrzeugsitzes ist im Sitzneigungskompensator gegebenenfalls auch eine Höhenanpassung vorgesehen.

Vorteilhafterweise weist die Head-Up-Display-Einheit einen Bildverzerrer auf, der in Abhängigkeit von der Verstellung des Fahrzeugsitzes das zur Anzeige kommende Bild vorverzerrt. Dabei ist die Vorverzerrung abhängig von vertikaler Verstellung und/oder horizontaler Verstellung und/oder Verstellung der Neigung der Rückenlehne. Die Vorverzerrung hat den Vorteil, daß auch bei nicht ganz gleichmäßiger Krümmung der teilreflektierenden transparenten Scheibe eine unverzerrte Wiedergabe ermöglicht ist. Der Bildverzerrer ist gemäß einer vorteilhaften Variante eine elektronische Einheit, die die darzustellenden Bilddaten vorverzerrt, beispielsweise anhand einer von mehreren, aus einem Speicher abrufbaren Warping-Matrizen. Der Bildverzerrer ist gemäß einer weiteren vorteilhaften Variante ein Spiegel der Head-Up-Display-Einheit, dessen Spiegelfläche partiell verformbaren ist, beispielsweise aufgrund eines Trägermaterials mit Memoryeffekt. Der Bildverzerrer ist gemäß einer weiteren Variante eine optische Scheibe variabler Dicke, variablen Brechungsindexes oder ein variables Hologramm.

Erfindungsgemäß ist vorgesehen, daß das Head-Up-Display-System in einem Fahrzeug zum Einsatz kommt und die Head-Up-Display-Einheit auf derjenigen Seite des Fahrzeugsitzes angeordnet ist, die der Außenseite des Fahrzeugs zugewandt ist. Aufgrund der Anordnung der Head-Up-Display-Einheit seitlich vom Kopf des Nutzers erscheint das von der Head-Up-Display-Einheit erzeugte virtuelle Bild vom Nutzer aus gesehen leicht seitlich versetzt. Ist die Head-Up-Display-Einheit nicht zur Mitte sondern zur Außenseite des Fahrzeugs hin am Fahrzeugsitz angeordnet, so hat dies den Vorteil, daß der Nutzer auch bei einem seitlichen Blick auf den Außenspiegel das virtuelle Bild, also die Anzeige, im Blick hat. Der Nutzer wird auch den Blick öfter Richtung Gegenverkehr also Richtung Fahrzeugaußenseite wenden. Die Anzeige ist somit während eines größeren Anteils der gesamten Fahrzeit gut im Blick des Nutzers. Ist die Head-Up-Display-Einheit demgegenüber zur Fahrzeugmitte hin angeordnet, so hat dies den Vorteil, daß eine geringere Vorverzerrung erforderlich ist, da die Windschutzscheibe, die die teilreflektierende transparente Scheibe bildet, in ihrem mittleren Bereich eine geringere und gleichförmigere Krümmung aufweist als in einem ihrer Seitenbereiche.

Weitere Einzelheiten und Vorteile der Erfindung lassen sich auch der nachfolgenden Beschreibung von Ausführungsbeispielen anhand von Figuren entnehmen. Dabei sind gleiche oder gleichwirkende Elemente in unterschiedlichen Abbildungen mit gleichen Bezugszeichen versehen. Es zeigen:
- Fig.1: Head-Up-Display-System gemäß Erfindung
- Fig.2: Variante eines Head-Up-Display-Systems
- Fig.3: Strahlengang in einem Head-Up-Display-System
- Fig.4: Fahrzeug mit Head-Up-Display-System
- Fig.5: Head-Up-Display-System mit Sitzneigungskompensator

Die folgenden Abbildungen sind schematische Prinzipdarstellungen, die nicht notwendigerweise maßstabsgerecht oder winkeltreu sind. Elemente, die bereits in einer vorhergehenden Abbildung beschrieben sind, werden in nachfolgenden Abbildungen nicht notwendigerweise erneut beschrieben.

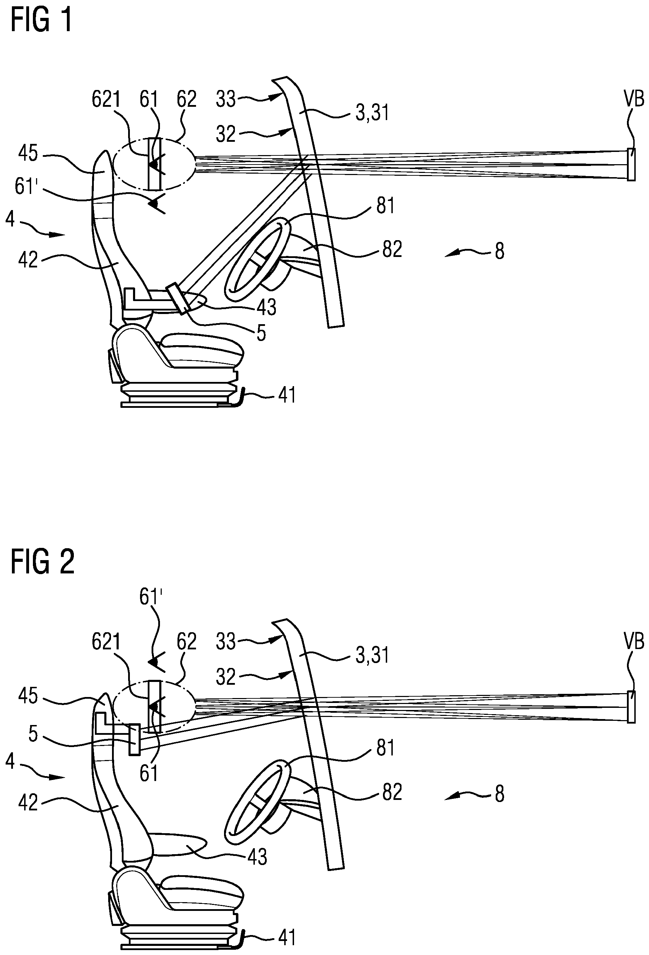

Fig.1 zeigt ein Head-Up-Display-System gemäß der Erfindung. Es weist eine teilreflektierende transparente Scheibe 3 auf, die die Windschutzscheibe 31 eines Fahrzeugs 8 ist. Sie weist einen Bereich 32 nahezu gleichmäßiger Krümmung auf und einen Bereich 33 variabler Krümmung. Das Head-Up-Display System weist weiterhin einen Fahrzeugsitz 4 auf, an dem eine Head-Up-Display Einheit 5 angeordnet ist. Der Fahrzeugsitz weist eine Höhenverstelleinrichtung 41 auf, eine Rückenlehne 42, Armstützen 43 und eine Kopfstütze 45. Das Fahrzeug 8 weist weiterhin ein Lenkrad 81 und eine Armaturenbrettabdeckung 82 auf. Weitere Teile des Fahrzeugs 8 sind hier übersichtlichkeitshalber nicht dargestellt.

In der hier dargestellten Variante ist die Head-Up-Display-Einheit 5 mittels einer Befestigung 44 an der Rückenlehne 42 des Fahrzeugsitzes 4 befestigt. Die Head-Up-Display-Einheit 5 erzeugt Lichtstrahlen, die an der Windschutzscheibe 31 reflektiert werden und in Richtung Auge 61 eines hier nicht dargestellten Nutzers verlaufen. Der Nutzer nimmt ein virtuelles Bild VB wahr, welches sich außerhalb des Fahrzeugs weit vor der Windschutzscheibe 31 zu befinden scheint. Das Auge 61 ist hier im Zentrum der Eyebox 62 dargestellt. Die Eyebox 62 ist der Bereich, innerhalb dessen sich das Auge befinden muß, um das virtuelle Bild VB wahrnehmen zu können. Im dargestellten Schnitt hat die Eyebox 62 die Form einer Ellipse. Der zentrale rechteckige Bereich 621 der Eyebox 62 ist der Bereich, in dem sich das Auge 61 optimalerweise befindet. Bei einem sehr kleinen Fahrer kann es passieren, daß sich das Auge 61' außerhalb der Eyebox 62 befindet. In diesem Fall ist eine Höhenverstellung vorzunehmen. Beispielsweise wird die Head-Up-Display-Einheit 5 geringfügig verkippt, sodaß deren Strahlengang etwas weiter unten auf der Windschutzscheibe 31 auftrifft, von dort reflektiert wird und das Auge 61' erreicht.

Fig.2 zeigt eine Variante eines erfindungsgemäßen Head-Up-Display-Systems, bei dem die Head-Up-Display-Einheit 5 an der Kopfstütze 45 angeordnet ist. Man erkennt, daß der Reflexionswinkel des Strahlengangs an der Windschutzscheibe 31 spitzer ist als zur vorhergehenden Abbildung. Der Strahlengang ist hier die Eyebox 62 teilweise überdeckend dargestellt. Dies verdeutlicht, daß sich die Optikeinheit 50 und damit der Strahlengang seitlich verschoben bezüglich der Kopfstütze 45 befinden (aus der Zeichenebene heraus).

Ist die Kopfstütze 45 höhenverstellbar und hat der Nutzer die Kopfstütze 45 zu niedrig eingestellt, so befindet sich das Auge 61' am Rand oder außerhalb der Eyebox 62, wie es hier übertrieben dargestellt ist. Da sich das Auge 61' außerhalb der Eyebox 62 befindet, kann der Nutzer das virtuelle Bild VB nicht sehen. Dies ist für ihn ein indirekter Hinweis, daß die Höhe der Kopfstütze 45 nicht korrekt eingestellt ist. Vorteilhafterweise wird zum korrekten Einstellen der Kopfstütze 45 ein Hinweis eingeblendet, der auf ein Verstellen der Kopfstütze nach oben beziehungsweise unten hinweist, wenn bestimmte Teile des Hinweises, beispielsweise drei Balken oberhalb und drei Balken unterhalb des Texts, nicht oder nicht vollständig sichtbar sind. Dies ermöglicht ein korrektes Einstellen der Höhe der Kopfstütze 45 und erhöht somit die Sicherheit.

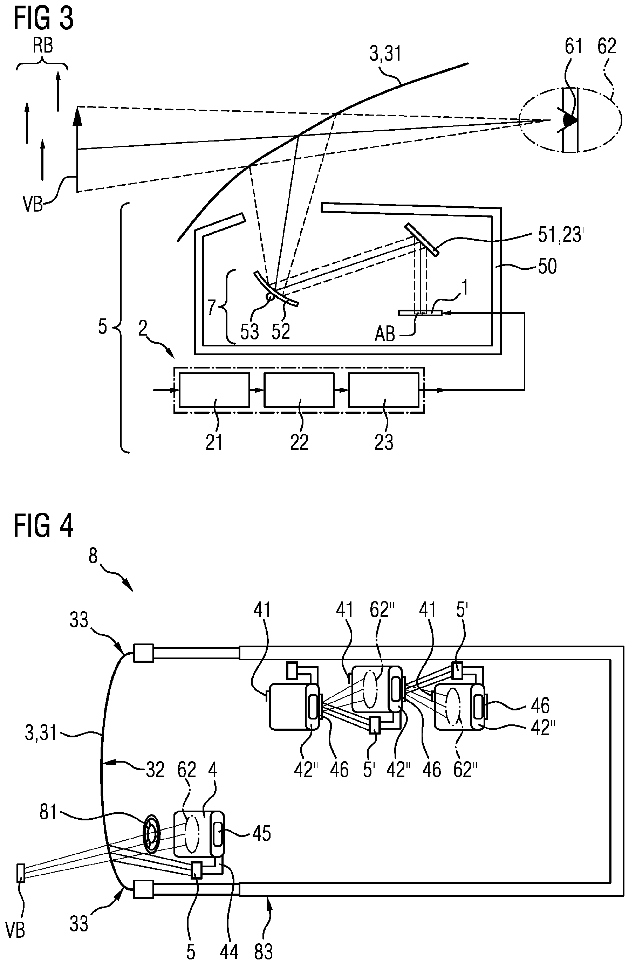

Fig.3 zeigt den Strahlengang in einem erfindungsgemäßen Head-Up-Display-System. Die Scheibe 3 ist hier stärker geneigt dargestellt als in den vorhergehenden Abbildungen und weist auch eine stärkere aber dennoch gleichmäßige Krümmung auf. Das Auge 61 eines Nutzers, beispielsweise des Fahrers eines Fahrzeugs oder eines anderen Nutzers, befindet sich im Zentrum der Eyebox 62. Das Auge 61 sieht ein virtuelles Bild VB durch die teilreflektierende transparente Scheibe 3 hindurch, die hier als Windschutzscheibe 31 ausgelegt ist. Die ins Auge 61 des Nutzers fallenden Lichtstrahlen wurden an der Windschutzscheibe 31 reflektiert, auf die sie von einer Optikeinheit 50 der Head-Up-Display-Einheit 5 her gelangen. Das virtuelle Bild VB erscheint dem Auge 61 des Betrachters der Realität, dem realen Bild RB, überlagert. Das reale Bild RB ist hier durch drei räumlich gestaffelte und in unterschiedlicher Höhe angeordnete Pfeile symbolisch dargestellt.

In der Optikeinheit 50 befindet sich eine Anzeigeeinheit 1, die hier als selbstleuchtendes flaches Display dargestellt ist, beispielsweise eine OLED-Anzeige. Auf der Anzeigeeinheit 1 ist ein anzuzeigendes Bild AB angedeutet. Von dort gelangt Licht auf einen ebenen Spiegel 51, von dem es auf einen beweglichen Spiegel 52 reflektiert wird. Dieser reflektiert es Richtung Windschutzscheibe 31, von wo aus es ins Auge 61 des Betrachters reflektiert wird. Der bewegliche Spiegel 52 ist hier um eine Drehachse 53 rotierbar dargestellt. Gemäß einer nicht dargestellten Variante ist zusätzlich eine Drehung um eine zur Drehachse 53 nichtparallele Drehachse vorgesehen. Der bewegliche Spiegel 52 und die Drehachse 53 sind Elemente einer Variante eines Sitzneigungskompensators 7. Durch die Drehung des Spiegels 52 verschiebt sich der Bereich auf der Scheibe 3, in dem die von der Optikeinheit 5 kommenden Strahlen reflektiert werden, und somit verschiebt sich die vertikale Position der Eyebox 62 so, daß sich das Auge 61, das nach einer Veränderung der Sitzneigung ebenfalls eine andere vertikale Position einnimmt, wieder innerhalb der Eyebox 62 befindet.

Ein Bildgenerator 2 wird eingangsseitig mit einem Bildsignal BS beaufschlagt und ist ausgangsseitig mit der Optikeinheit 50 verbunden. Der Bildgenerator 2 weist eine Datenverarbeitungseinheit 21 auf, in der eine gegebenenfalls komplexe Datenverarbeitung erfolgt. Dazu zählt im Fall eines Head-Up-Display-Systems mit Augmented Reality (Augmented Reality: die Realität ergänzende oder erweiternde Informationen) die Bilderkennung in einem von einer Kamera aufgenommenen realen Bild der Umgebung, um erkannten Bildelementen passende Zusatzdaten für die Augmented Reality zuordnen zu können. Auch das Sammeln und Aufbereiten weiterer anzuzeigender Informationen ist Teil der von der Datenverarbeitungseinheit 21 ausgeführten Datenverarbeitung. Die verarbeiteten Daten werden einer Zeicheneinheit 22 zugeführt, die das darzustellende Bild zeichnet. Dieses wird einem Bildverzerrer 23 zugeführt, der eine Vorverzerrung entsprechend der Wölbung der Windschutzscheibe 31 sowie entsprechend weiterer im optischen Pfad zwischen Anzeigeeinheit 1 und Auge 61 auftretender, eine Verzerrung hervorrufender optischer Randbedingungen durchführt. Der Bildverzerrer 23 greift gemäß einer Variante auf unterschiedliche Warping-Matrizen zu, die in einem hier nicht dargestellten Speicher abgelegt sind. Je nach Verstellung des Sitzes wird dabei eine Warping-Matrix verwendet, die optimal an den Bereich der Windschutzscheibe 31 angepasst ist, an dem die Reflexion stattfindet. Auch eine nicht ganz gleichmäßiger Krümmung der Windschutzscheibe 31 wird somit kompensiert. Das vorverzerrt Bildsignal wird der Optikeinheit 50 zugeführt. Gemäß einer weiteren Variante ist der Spiegel 51 als Bildverzerrer 23' vorgesehen. Er ist dabei mechanisch oder elektrisch ansteuerbar und ändert seine Form geringfügig entsprechend der Ansteuerung. Die entsprechend geänderte Form erzeugt eine Vorverzerrung, die eine durch die Krümmung der Windschutzscheibe 31 hervorgerufene Verzerrung kompensiert. Gemäß einer weiteren Variante ist beispielsweise auf dem Spiegel 51 oder an einer anderen Stelle des Strahlengangs eine hier nicht dargestellte optische Scheibe variabler Dicke oder variablen Brechungsindexes oder ein variables Hologramm angeordnet, welche ebenfalls dazu geeignet sind, eine entsprechende Vorverzerrung zu erzeugen.

Fig.4 zeigt ein Fahrzeug 8 mit einem erfindungsgemäßen Head-Up-Display-System in schematischer geschnittener Draufsicht. Man erkennt die teilreflektierende transparente Scheibe 3, die Windschutzscheibe 31, mit ihrem Bereich 32 gleichmäßiger Krümmung und ihren Bereichen 33 variabler Krümmung. Der Fahrzeugsitz 4 befindet sich hinter dem Lenkrad 81 die Head-Up-Display-Einheit 5 ist mittels der Befestigung 44 an der Kopfstütze 45 befestigt. Sie ist zwischen der linken Außenseite 83 des Fahrzeugs 8 und dem Fahrzeugsitz 4 angeordnet. Sie befindet sich somit seitlich nach links versetzt von einem Nutzer, der auf dem Fahrzeugsitz 4 Platz nimmt. Der Strahlengang weist somit auch in Draufsicht einen Reflexionswinkel größer Null auf. Die Eyebox 62 befindet sich damit mittig bezogen auf den Fahrzeugsitz 4. Allerdings muß der Nutzer seinen Blick leicht seitlich nach links wenden, um das virtuelle Bild VB zentral zu sehen.

Im hinteren Bereich des Fahrzeugs 8 sind weitere Fahrzeugsitze 4' angeordnet, die an der Rückseite ihrer Rückenlehnen 42" Spiegel 46 aufweisen an denen Strahlen, die von Head-Up-Display-Einheiten 5' ausgesendet werden, reflektiert werden, in eine entsprechende Eyebox 62" gelangen. Die Fahrzeugsitze 4' sind seitlich versetzt zueinander angeordnet, und die Head-Up-Display Einheiten 5' sind entsprechend dem jeweiligen Vordersitz versetzt angeordnet, sodaß der Reflexionswinkel, und damit der seitliche Versatz des virtuellen Bildes VB, nicht zu groß wird. Die Ausführungsform des Head-Up-Display Systems mit einer Head-Up-Display Einheit 5' und einem Spiegel 46 zur Reflexion der von der Head-Up-Display Einheit ausgesendeten Strahlen ist nicht Teil der Erfindung.

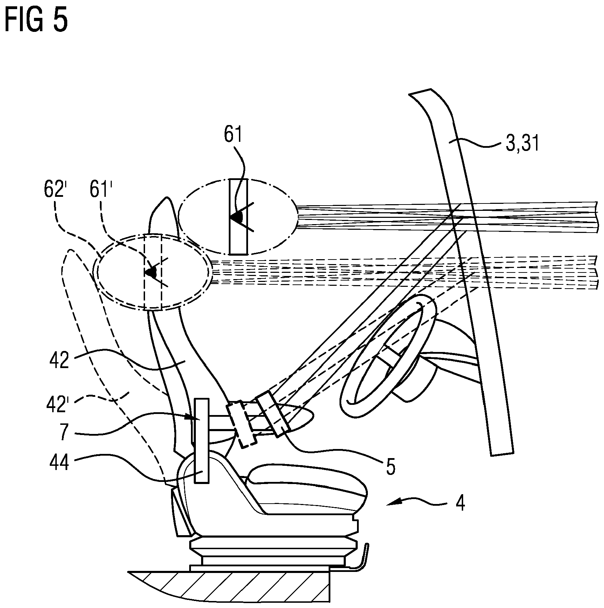

Fig.5 zeigt ein erfindungsgemäßes Head-Up-Display-System mit einer Variante eines Sitzneigungskompensators 7. Man erkennt die Rückenlehne 42 in ihrer Normalposition, und, gestrichelt gezeichnet, die Rückenlehne 42' in einer weit nach hinten geneigten Position. Die Head-Up-Display-Einheit 5 ist hier mittels der Befestigung 44 an einem bezüglich der Neigung der Rückenlehne 42 feststehenden Teil des Fahrzeugsitzes 4 angeordnet. Die Befestigung 44 ändert ihre Position bei einer Neigungsänderung der Rückenlehne 42 nicht. Allerdings ändert sich die Position des Auges 61 bei einer Neigungsänderung. Es befindet sich dann als Auge 61' an einer nach unten und hinten versetzten Position. Ein in der Befestigung 44 befindlicher Sitzneigungskompensator 7 weist Mittel zum Detektieren der Neigung der Rückenlehne 42 auf. Entsprechend der detektierten Neigung bewegt der Sitzneigungskompensator 7 die Head-Up-Display-Einheit 5 nach hinten und verkippt diese so, daß die von ihr ausgesandten Strahlen an einer niedrigeren Position der Windschutzscheibe 31 reflektiert werden und somit auch die Eyebox 62', die hier gestrichelt dargestellt ist, eine niedrigere Position einnimmt. Durch die horizontale Verschiebung der Head-Up-Display-Einheit 5 nach hinten verschiebt sich auch die Eyebox 62' nach hinten. Das Auge 61-befindet sich nun wieder in einer optimalen Position innerhalb der Eyebox 62'.

Die Erfindung betrifft Head-Up Displays. Diese sind im allgemeinen starr im Fahrzeug 8 am Querträger unterhalb der Windschutzscheibe 31 und unterhalb der Armaturenbrettabdeckung 82 befestigt. Die Optikeinheiten 50 werden üblicherweise spezifisch für gegebene Fahrzeuggruppen entwickelt. Die Anzeige in einem die Windschutzscheib 31 als teilreflektierende transparente Scheibe 3 nutzenden Head-Up-Display-System ist in der Regel für einen kleinen Sichtbereich des Fahrers, die Eyebox 62, ausgelegt, und ist aufgrund von Bauraumbeschränkungen nicht auf größere Kopfbewegung ausgelegt. Durch einen großen Verfahrweg des Fahrzeugsitzes 4 würde ein herkömmliches Head-Up-Display-System und dessen Projektionseinheit sehr groß werden und einen zu großen Bauraum unterhalb der Armaturenbrettabdeckung 82 beanspruchen. Durch die Auf- und Abbewegung im Fahrbetrieb ändert sich die Lage der Eyebox 62 zum feststehenden Head-Up-Display ständig. Daraus folgt, daß die Darstellung sich ebenfalls ständig mitändert. Bei einem herkömmlichen Head-Up-Display-System würde das Bild aus dem Sichtbereich immer wieder verschwinden. Daraus resultieren eine schlechtere Bildperformance und eine Ablenkung des Fahrers durch das häufig verschwindende und wieder auftauchende Bild. Weiterhin gehen dabei Informationen verloren. Durch Anbinden der Head-Up-Display-Einheit 5, die oft auch als Bildgebenden Einheit oder PGU bezeichnet wird, an den Sitz bleibt die Lage der Eyebox zur Anzeige des Head-Up-Display-Systems gleich. Dadurch wird der negative Einfluß im Fahrbetrieb kompensiert. Dies ist insbesondere bei Lastkraftwagen, Bussen und anderen Fahrzeugen von Bedeutung, die eine recht steil stehende Windschutzscheibe 31 aufweisen. Auch bei Anbindung der Head-Up-Display-Einheit 5 an die Karosserie in der Nähe des Fahrzeugsitzes 4 kann der Nutzer in einer großen Eyebox 62, eine Spiegelung der Head-Up-Display-Einheit 5, also das virtuelle Bild VB in der Windschutzscheibe wahrnehmen. Hierbei wird vorteilhafterweise mittels einer aktiven Bildverstellung die Bildlage zum Nutzer geregelt. Die erfindungsgemäß vorgeschlagene adaptive Lösung mit der Befestigung der Head-Up-Display-Einheit 5 am Fahrzeugsitz 4 kann allgemein in verschiedensten Anwendungen genutzt werden. Als Einsatzgebiete kommen infrage LKW, Traktoren, Kräne, Mähdrescher, Züge, Straßenbahnen, Fluggeräte, Schiffe, Gabelstapler, und andere Luft-, Wasser-, oder Bodenfahrzeuge.

Es versteht sich, daß hier nicht alle möglichen Varianten und Abwandlungen des erfindungsgemäßen Head-Up-Display-Systems beschrieben sind. Es liegt im Ermessen des Fachmanns, die genannten Maßnahmen abzuändern oder in anderer als der beschriebenen Art und Weise zu kombinieren.

## Patentansprüche

1. Head-Up-Display-System aufweisend
- eine teilreflektierende transparente Scheibe (3) mit einem Bereich (32) nahezu gleichmäßiger Krümmung,
- eine Head-Up-Display-Einheit (5),
- einen Fahrzeugsitz (4),
wobei die Head-Up-Display-Einheit (5) am Fahrzeugsitz (4) angeordnet ist;
**dadurch gekennzeichnet, dass**
es sich bei der teilreflektierenden transparenten Scheibe (3) um die Windschutzscheibe (31) eines Fahrzeugs (8) handelt, wobei der Bereich (32) nahezu gleichmäßiger Krümmung zum Reflektieren der von der Head-Up-Display-Einheit (5) ausgehenden Lichtstrahlen genutzt wird.

2. Head-Up-Display-System gemäß Anspruch 1, wobei der Fahrzeugsitz (4) eine Kopfstütze (45) aufweist, an der die Head-Up-Display-Einheit (5) befestigt ist.

3. Head-Up-Display-System gemäß einem der vorhergehenden Ansprüche, wobei die Head-Up-Display-Einheit (5) mittels einer Befestigung (44) an dem Fahrzeugsitz (4) befestigt ist, und die Befestigung (44) einen Sitzneigungskompensator (7) aufweist.

4. Head-Up-Display-System gemäß einem der vorhergehenden Ansprüche, wobei die Head-Up-Display-Einheit (5) einen Bildverzerrer (23) aufweist, der in Abhängigkeit von der Verstellung des Fahrzeugsitzes (4) vorverzerrt, wobei die Vorverzerrung abhängig ist von vertikaler Verstellung des Fahrzeugsitzes (4) und/oder horizontaler Verstellung des Fahrzeugsitzes (4) und/oder Verstellung der Neigung der Rückenlehne (42) des Fahrzeugsitzes (4), so daß auch bei nicht ganz gleichmäßiger Krümmung der teilreflektierenden transparenten Scheibe (3) eine unverzerrte Wiedergabe ermöglicht ist.

5. Fahrzeug (8) mit einem Head-Up-Display-System gemäß einem der vorhergehenden Ansprüche, wobei die Head-Up-Display-Einheit (5) auf der der Außenseite (83) des Fahrzeugs (8) zugewandten Seite des Fahrzeugsitzes (4) angeordnet ist.

## Claims

1. Head-up display system having
- a partially reflective transparent panel (3) having a region (32) of virtually uniform curvature,
- a head-up display unit (5),
- a vehicle seat (4),
wherein the head-up display unit (5) is arranged on the vehicle seat (4);
**characterized in that**
the partially reflective transparent panel (3) is the windscreen (31) of a vehicle (8), wherein the region (32) of virtually uniform curvature is used to reflect the light beams originating from the head-up display unit (5).

2. Head-up display system according to Claim 1, wherein the vehicle seat (4) has a headrest (45), to which the head-up display unit (5) is attached.

3. Head-up display system according to one of the preceding claims, wherein the head-up display unit (5) is attached to the vehicle seat (4) by means of an attachment (44), and the attachment (44) has a seat inclination compensator (7).

4. Head-up display system according to one of the preceding claims, wherein the head-up display unit (5) has an image distorter (23) which pre-distorts as a function of the adjustment of the vehicle seat (4), wherein the pre-distortion depends on the vertical adjustment of the vehicle seat (4) and/or horizontal adjustment of the vehicle seat (4) and/or adjustment of the inclination of the backrest (42) of the vehicle seat (4), so that non-distorted reproduction is made possible even when the curvature of the partially reflective transparent panel (3) is not entirely uniform.

5. Vehicle (8) having a head-up display system according to one of the preceding claims, wherein the head-up display unit (5) is arranged on the side of the vehicle seat (4) that faces the outside (83) of the vehicle (8).

## Revendications

1. Système d'affichage tête haute, possédant
- une vitre (3) transparente partiellement réfléchissante comprenant une zone (32) à la courbure presque régulière,
- une unité d'affichage tête haute (5),
- un siège de véhicule (4),
l'une unité d'affichage tête haute (5) étant disposé au niveau du siège de véhicule (4) ;
**caractérisé en ce que**
la vitre (3) transparente partiellement réfléchissante est le pare-brise (31) d'un véhicule (8), la zone (32) à la courbure presque régulière étant utilisée pour réfléchir les rayons lumineux émanant de l'unité d'affichage tête haute (5).

2. Système d'affichage tête haute selon la revendication 1, le siège de véhicule (4) possédant un appui-tête (45) auquel est fixée l'unité d'affichage tête haute (5).

3. Système d'affichage tête haute selon l'une des revendications précédentes, l'unité d'affichage tête haute (5) étant fixée au siège de véhicule (4) au moyen d'une fixation (44) et la fixation (44) possédant un compensateur d'inclinaison de siège (7).

4. Système d'affichage tête haute selon l'une des revendications précédentes, l'unité d'affichage tête haute (5) possédant un déformateur d'image (23) qui pré-déforme en fonction du positionnement du siège de véhicule (4), la pré-déformation étant dépendante du positionnement vertical du siège de véhicule (4) et/ou du positionnement horizontal du siège de véhicule (4) et/ou du positionnement de l'inclinaison du dossier (42) du siège de véhicule (4), de sorte qu'une reproduction non déformée soit possible même dans le cas d'une courbure non entièrement régulière de la vitre (3) transparente partiellement réfléchissante.

5. Véhicule (8) équipé d'un système d'affichage tête haute selon l'une des revendications précédentes, l'unité d'affichage tête haute (5) étant disposée sur le côté du siège de véhicule (4) qui fait face au côté extérieur (83) du véhicule (8).
